# FASCICULE DE BREVET EUROPEEN

(11) **EP 2 291 462 B1**
(45) Date de publication et mention de la délivrance du brevet: **13.08.2014**
(21) Numéro de dépôt: 09738128.9
(22) Date de dépôt: 28.04.2009
(51) Int. Cl.: C09D 5/16, C09D 183/04, B08B 17/00, B01J 31/02, B01J 27/24, C08G 77/08, B05D 5/08, B01J 31/12, B63B 59/04, B08B 17/02

(54) **ARTICLE PRESENTANT DES PROPRIETES ANTISALISSURES ET DESTINE A ETRE UTILISE DANS DES APPLICATIONS AQUATIQUES EN PARTICULIER MARINES**
ARTIKEL MIT ANTISCHMUTZEIGENSCHAFTEN ZUM EINSATZ IN AQUATISCHEN ANWENDUNGEN, INSBESONDERE BEI DER SCHIFFFAHRT
ARTICLE HAVING ANTIFOULING PROPERTIES AND INTENDED TO BE EMPLOYED IN AQUATIC USES, IN PARTICULAR MARINE USES

(30) Priorité: 30.04.2008 FR 0802441
(43) Date de publication de la demande: 09.03.2011
(73) Titulaire: Bluestar Silicones France, 69486 Lyon Cedex 03 (FR)
(72) Inventeur: BLANC, Delphine, F-69007 Lyon (FR); BARRANDON, Georges, F-69440 Mornant (FR); MALIVERNEY, Christian, F-69690 Saint Julien Sur Bibost (FR)
(74) Mandataire: Mekki, Boualem
(86) Numéro de dépôt international: PCT/EP2009/055095
(87) Numéro de publication internationale: WO 2009/133084

(56) Documents cités:
- WO-A-2007/037484
- US-A1- 2008 039 565
- US-B1- 6 518 309
- EDWARD W. THOMAS, EDWARD E. NISHIZAWA, DAVID C. ZIMMERMANN, AND DAVEY J. WILLIAMS: "Synthesis of acylguanidine analogs: inhibitors of ADP-induced platelet aggregation" JOURNAL OF MEDICINAL CHEMISTRY, [Online] vol. 32, no. 1, janvier 1989 (1989-01), pages 228-236, XP002504171 Extrait de l'Internet: URL:http://dx.doi.org/10.1021/jm00121a041> [extrait le 2008-11-17]

## Description

La présente invention concerne un article présentant des propriétés antisalissures et destiné à être utilisé dans des applications aquatiques en particulier marines ainsi qu'un procédé pour retarder la croissance des organismes aquatiques sur les structures submersibles ou semi-submersibles.

L'invention se rapporte au domaine des peintures marines anti-salissures (« antifouling »). Les peintures marines antisalissures sont des revêtements de finition destinés à empêcher la fixation d'animaux ou de végétaux sur les carènes des navires. Elles sont employées pour des raisons de sécurité, de maintien de la manoeuvrabilité des navires, de diminution de la consommation de combustible, de lutte contre la corrosion et d'alourdissement des structures.

Le problème des « biosalissures » constitue un problème majeur résultant de l'immersion de matériaux dans les milieux marins. La prévention de ce phénomène représente un coût considérable en maintenance.

En effet, la formation des « biosalissures » ou «salissures» se produit lors de l'immersion dans l'eau de mer où une couche de molécules organiques et inorganiques est adsorbée à la surface du matériau extrêmement rapidement. Cette couche de matière adsorbée ou « biofilm » sert de médiateur pour l'adhésion des bactéries présentes en suspension dans le milieu marin.

Cette colonisation de la surface par les bactéries marines est rapide et un état stationnaire est atteint au bout d'une période de quelques heures à quelques jours. Enfin, d'autres organismes marins viennent coloniser la surface, les bactéries adhérentes recrutant ces autres organismes. L'ensemble de ces organismes vivants liés à la surface constitue les « biosalissures » ou « fouling », anglicisme qui désigne les salissures.

L'adhésion de salissures marines concerne toute structure immergée en mer: navires, pipelines, tours et circuits de refroidissement, structures portuaires, capteurs marins, systèmes d'aquaculture... Les dommages engendrés sont nombreux et divers. En effet, sur ces structures s'incrustent, par exemple, des organismes qui ont un effet négatif sur les performances des structures.

En particulier, pour les coques de navires, l'incrustation de divers organismes marins augmente les frottements entre les coques de navires et l'eau de mer, ce qui diminue la vitesse et peut entraîner une plus grande consommation de combustible. Ainsi le fond d'un navire qui n'est pas protégé par un système antisalissure peut, après moins de six mois passés en mer, être recouvert de 150 kg de salissure par mètre carré.

C'est pour éviter cette perte économique, et aussi pour mieux inhiber les phénomènes de corrosion, que l'on applique sur les parties immergées des structures exposées à l'eau des peintures dites antisalissures ou « antifouling » qui ont pour but de prévenir ou de réduire notablement l'encrassement par les incrustations d'organismes marins. Le principe des peintures antisalissures repose sur la libération contrôlée de la substance active à l'interface entre la surface et l'eau de mer. L'efficacité de la peinture est maintenue tant que la concentration en substance active relarguée en surface est efficace et régulière. La plupart des peintures antisalissures contiennent donc un produit biocide qui est le plus souvent un composé organométallique (à base d'étain, de cuivre ou de zinc) ou un composé organique (fongicide, algicide, bactéricide) qui prévient l'adhésion des salissures marines par leur activité toxique.

Cependant, le problème associé à l'utilisation de ces peintures est qu'elles relarguent dans le milieu marin des substances nocives pour la faune et la flore maritimes. De plus, les revêtements deviennent de plus en plus rugueux en se dégradant progressivement, ce qui augmente la consommation de carburant et accroît le bruit hydrodynamique émis par la structure immergée.

Cette nouvelle difficulté a été résolue en utilisant des peintures antisalissures autopolissables. En plus de posséder des agents biocides, ces peintures présentent, sous l'action de l'hydrolyse superficielle par l'eau de mer et de celle de l'érosion due au mouvement du navire, une perte régulière et contrôlée d'épaisseur en fonction du temps. La lente érosion du revêtement en contact avec l'eau de mer permettant de raviver constamment la surface en agents biocides.

Les peintures antisalissures autopolissables développées depuis les années 1960 étaient à base de sels d'étain. Il s'agissait de peintures autopolissantes, formulées à partir de copolymères de méthacrylate de tributylétain (TBT) qui possèdent un taux de lixiviation constant. Le TBT greffé sur un liant acrylique est libéré lentement par hydrolyse dans l'eau. Des exemples de ce type de peinture sont décrits dans les documents FR-A-2266733, FR-A-2557585, EP-A-0051930 et GB-A-2118196.

Le tributylétain (TBT), très efficace a donc été le biocide le plus utilisé dans les peintures antisalissures, mais ce produit, ses molécules de dégradation et ses métabolites se sont révélés gravement et durablement polluants. Pour ces raisons, l'organisation maritime internationale a interdit l'utilisation des peintures antisalissures à base d'étain.

Les peintures antisalissures utilisées aujourd'hui sont principalement à base de composés cuivrés et/ou de composés chimiques de synthèse mais également à base de polymères de type silicone.

Pour les peintures à base de cuivre, bien que moins toxiques que les sels d'étain, elles sont pratiquement toujours formulées avec une proportion massive d'oxyde cuivreux (voir par exemple le document EP-A-051930 ou FR-A-2557585), le liant principal étant à base de polymères spéciaux généralement du type acrylique. Cependant, elles ne sont efficaces que contre la faune marine et pour lutter contre la pousse d'algues, il est indispensable d'ajouter des herbicides qui peuvent faire peser de nouvelles menaces sur l'environnement.

Cette alternative n'apporte donc pas de solution durable pour protéger l'environnement de l'important rejet d'ions lourds, notamment ceux du cuivre consécutif à la mise en oeuvre intensive de peintures sans étain mais riches en cuivre.

Une autre solution pour prévenir l'encrassement des surfaces de structures en contact avec l'eau de mer consiste à recouvrir ces surfaces par au moins un revêtement protecteur, la couche externe du revêtement en contact avec l'eau étant un élastomère silicone. Ces revêtements sont préparés à partir de peintures dites « fouling-release coating ». Le principe de ces nouvelles peintures antisalissures est de créer une surface très lisse, à faible énergie de surface sur laquelle les organismes ont de grandes difficultés à adhérer. Quand de telles surfaces sont stationnaires, des organismes marins peuvent s'y déposer. Cependant, grâce à la souplesse et à la faible tension superficielle de la couche de finition à base de silicone, ces organismes sont tout simplement éliminés par la force du mouvement de l'eau ou l'effet de frottement causé par le mouvement du navire. Cela signifie également que, s'il y a suffisamment de mouvement de l'eau autour de la coque d'un navire, un effet autonettoyant naturel se produit.

Grâce à ces propriétés, même les navires qui sont moins fréquemment en mer ou dans des eaux à moindre mouvement bénéficient d'intervalles de nettoyage plus échelonnés. Cela est dû au fait que les organismes marins ont du mal à adhérer à la surface ; ce qui rend aussi le nettoyage plus aisé.

Ces peintures à base de silicones formant un revêtement antisalissures sont donc très novatrices:
- elles sont totalement respectueuse de l'environnement marin : pas de rejet de métaux, et
- elles améliorent la glisse des navires, réduisant ainsi de 1 à 5% leur consommation de fuel et donc leurs émissions de gaz à effet de serre.

Il existe de nombreux brevets, par exemple les brevets FR-A-2 083 029 et US-A-3 702 778, décrivant de tels revêtements dont la couche finale, appelée « top coat », est en élastomère silicone durci à chaud ou à froid.

Par exemple, dans la demande de brevet US n °07/847 401, déposée le 6 Mars 1992, , est décrit un système antisalissure à trois constituants, comprenant au moins une couche de primaire époxy, une couche de fixation ou primaire d'adhésion (« tie coat ») et une couche antisalissure (« top coat ») à base d'élastomère silicone. La couche finale de primaire époxy est normalement une couche mince que l'on applique pour obtenir une surface propre et fraîche à laquelle la couche de fixation peut adhérer. La couche de fixation comprend un organopolysiloxane et un constituant durcissant. La couche antisalissure comprend un organopolysiloxane, un silicate d'alkyle et un agent de durcissement ou un catalyseur séparé à base d'étain. La couche ou les couches de primaire époxy sont appliquées directement au support. La couche de fixation est appliquée sur la couche ou les couches de primaire époxy. La couche antisalissure en revêtement de silicone est ensuite appliquée et réticulée sur la couche de fixation, après durcissement partiel de cette dernière.

Une couche antisalissure (« top coat ») à base d'élastomère silicone peut comporter en outre des fluides qui améliorent l'effet "antisalissure" en particulier:
- des huiles méthylphénylpolysiloxanes (US-A-4 025 693),
- un composé liquide hydrocarboné, par exemple une polyoléfine,
- un plastifiant,
- une huile lubrifiante (FR-A-2 375 305),
- des paraffines liquides et des masses cireuses du type pétrolatum (JP-A-83/013 673),
- un polymère thermoplastique tel que du PVC,
- un copolymère chlorure de vinyle/acétate de vinyle (KOKAI JP-A-79/026 826), ou
- des tensio-actifs cationiques, anioniques, non-ioniques, amphotères (JP-A-85/258 271).

Afin de former le revêtement en élastomère silicone, les formulations silicones utilisées font généralement intervenir une huile silicone, généralement un polydiméthylsiloxane réactif à terminaisons hydroxylées, éventuellement pré-fonctionnalisées par un silane de façon à présenter des extrémités alcoxy, un réticulant et un catalyseur de polycondensation, classiquement un sel d'étain ou un titanate d'alkyle, une charge de renfort et d'éventuels autres additifs comme des charges de bourrage, des promoteurs d'adhérence, des colorants, etc.

Ces compositions organopolysiloxaniques vulcanisables dès la température ambiante sont bien connues et sont classées en 2 groupes distincts: les compositions monocomposantes (RTV-1) et les compositions bicomposantes (RTV-2). Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomèrique.

Généralement, les compositions monocomposants (RTV-1) réticulent quand elles sont exposées à l'humidité de l'air, c'est-à-dire qu'elles ne peuvent réticuler dans un milieu en confiné. Par exemple, les compositions silicones monocomposant réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente; ces réactions sont donc catalysées par un catalyseur approprié. Comme catalyseurs utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité. Les élastomères silicones monocomposants à extrémités -Si(OR) sont parfois désignés sous l'appellation élastomères alcoxy.

Quand aux compositions bicomposantes, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398.

Ces compositions comportent essentiellement 4 ingrédients différents:
- un polymère réactif α,ω-dihydroxydiorganopolysiloxane,
- un agent de réticulation, généralement un silane, un silicate ou un polysilicate,
- un catalyseur à l'étain, et
- de l'eau.

Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, les chélates de titane (EP-A-0 885 933, US-5 519 104, US-A-4,515,932, US-A-4,563,498, US-A-4,528,353).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Ainsi, la demande internationale WO 2004/020525 et ta demande US 2008/039565 décrivent des compositions silicones monocomposants (RTV-1) utilisées comme mastics ou adhésifs et qui réticulent à froid quand elles sont exposées à l'humidité de l'air et comprenant en plus des composants habituels :
- un réticulant (D) spécifique et essentiel qui est un silane à fonctions 1-méthylvinyloxy connu pour sa forte réactivité comparée à celle des réticulants classiques, et
- des catalyseurs qui sont des dérivés organiques à fonction imines de formules (I) ou (II) suivantes: 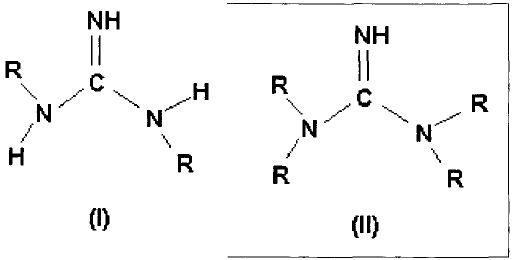 avec R étant un radical spécifique choisi parmi les groupes suivants : méthyle, isopropyle, phényle et orthotolyle. Des exemples de ces dérivés organiques de type imine sont la 1,3-diphénylguanidine, la 1,3-di-o-tolylguanidine, la 1,3-diméthylguanidine et la 1,1,3,3-tétraméthylguanidine qui est le dérivé préféré. Ces dérivés présentent la particularité de posséder une fonction imine non substituée, c'est-à-dire une fonction du type C=NH. Il est à noter qu'un réticulant classique de type trialcoxysilane, composant (E), est toujours utilisé en association avec le réticulant (D) qui est un silane connu pour sa forte réactivité due à la présence de fonctions de type 1-méthylvinyloxy.

Cependant, le problème associé à l'utilisation des catalyseurs organiques à fonction imines décrits dans la demande internationale WO 2004/020525 est qu'ils doivent être utilisés en présence de réticulants spécifiques très réactif et coûteux (silanes à fonctions 1-méthylvinyloxy), c'est à dire que des réticulants classiques de structures simples, qui sont très largement utilisés dans les formulations RTV-I ou RTV-II, tels que par exemple les alkyltrialcoxysilanes, les silicates d'alkyle ou les polysilicates d'alkyle, ne peuvent leur être associés sans la présence obligatoire d'un réticulant très réactif tel que le silane à fonctions 1-méthylvinyloxy. En effet, sans la présence de ce silane très réactif la réticulation de la composition en élastomère est alors insuffisante et ne permet pas d'obtenir de bonnes propriétés mécaniques. Ainsi, le dérivé 1,1,3,3-tétraméthylguanidine, qui est présenté dans le mode de réalisation préférentiel de cette demande de brevet, lorsqu'il est utilisé avec un réticulant classique, tel que par exemple un polysilicate d'alkyle, et sans la présence d'un silane réactif spécifique à fonction méthylvinyloxy, dans un RTV monocomposant (RTV-I), la réticulation du système est alors insuffisante et ne peut générer un élastomère silicone.

Dans des applications antisalissures faisant intervenir de grande quantités de peintures, ce problème est rédhibitoire du fait du surcoût engendré par l'utilisation d'un réticulant spécifique, très réactif, coûteux et n'offrant que peu de flexibilité à l'utilisateur final. Par exemple, une caractéristique importante d'une composition silicone durcissable est le temps de mise en oeuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un revêtement dur dans un délai raisonnable. Par exemple pour un revêtement de type "tie coat" ou "top coat" un temps de travail inférieur à 4 heures est généralement requis lorsque la température extérieure est comprise entre 20 et 30°C. Mais, les conditions atmosphériques dans lesquelles cette réticulation a lieu sont très variables avec des températures comprises entre 5 et 50°C et une hygrométrie pouvant varier de 0 à 100%. Hors, un des moyen d'ajuster ce temps de travail est la nature des composants utilisés comme le catalyseur ou le réticulant.

Ces problèmes de réactivité du réticulant dans les compositions silicones monocomposants (RTV-1) sont bien connus par l'homme de l'art. En effet, les réticulants alcoxysilanes les plus utilisés sont ceux présentant des groupes méthoxy pour leurs réactivités intrinsèques. Cependant, un des problèmes associés à l'utilisation de ce type d'alcoxysilanes est un dégagement de méthanol source de problèmes sur un plan d'hygiène et de sécurité.

La demande WO2007/03784 décrit des compositions réticulables à base de polymères organiques ayant des fonctions siliciées comprenant des composés aminés comme catalyseurs de polycondensation.

Pour un développement durable, il apparaît donc nécessaire de développer de nouvelles peintures antisalissure ne comprenant pas de catalyseur toxique. De plus, ces catalyseurs doivent être utilisables quel que soit le type de réticulant utilisé et permettre ainsi l'emploi de réticulant plus respectueux des conditions d'hygiène et de sécurité.

Pour toutes ces raisons, de nouvelles stratégies pour lutter contre l'adhésion des salissures aquatiques et en particulier marines se développent aujourd'hui.

L'invention a pour but de proposer un article possédant des propriétés antisalissures au moyen de revêtements obtenus à partir de peintures antisalissures ne comportant pas de composants prohibés (biocide ou catalyseur) et ne contenant pas d'étain.

La présente invention concerne donc un article présentant des propriétés antisalissures et destiné à être utilisé dans des applications aquatiques en particulier marines, qui comprend:
a) un support,
b) éventuellement au moins une couche primaire sur ledit support comprenant au moins un produit anticorrosif,
c) au moins une couche favorisant l'adhérence dite "tie coat", déposée sur ladite couche primaire ou sur ledit support lorsque la couche primaire est absente, et
d) au moins une couche antisalissure dite "top coat", déposée sur ladite couche favorisant l'adhérence ou "tie coat",
ledit article étant caractérisé en ce que la couche antisalissure et/ou la couche favorisant l'adhérence est/sont préparée(s) à partir d'une composition polyorganosiloxane durcissable ne contenant pas de catalyseur métallique et caractérisée en ce qu'elle comprend d'une part une base silicone B apte à durcir par une réaction de polycondensation en un élastomère silicone et d'autre part, une quantité comprise entre 0,01 to 10% en poids de la masse totale d'au moins un catalyseur de polycondensation A qui est un composé organique non silylé et répondant à la formule générale (I): 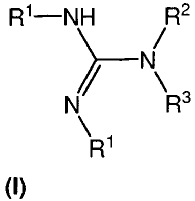 dans laquelle,
- les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
- le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
- le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, et
- avec la condition supplémentaire que les radicaux R¹, R² et R³ ne comprennent pas d'atome de silicium.

Pour atteindre cet objectif, la Demanderesse a eu le mérite de mettre en évidence, de manière tout à fait surprenante et inattendue, que les composés organique non silylé et répondant à la formule générale (I) permettent de préparer des revêtements utiles comme "tie coat" ou "top coat" dans les applications antisalissures. Les revêtements obtenus selon l'invention ont des propriétés d'adhésion remarquables sur les supports ainsi traités tout en conférant une surface traitée très lisse, à faible énergie de surface sur laquelle les organismes ont de grandes difficultés à adhérer.

Il est aussi du mérite des inventeurs d'avoir vaincu le préjugé technique, tel qu'enseigné par exemple par la demande internationale WO 2004/020525, qui voulait que, jusqu'alors, les catalyseurs proches en terme de structure, tels que la 1,3-diphénylguanidine, la 1,3-di-o-tolylguanidine, la 1,3-diméthylguanidine ou la 1,1,3,3-tétraméthylguanidine devaient être associés à des réticulants spécifiques très réactif et coûteux (silanes à fonctions 1-méthylvinyloxy), pour réticuler des formulations de type RTV.

Les composés non silylés selon l'invention et répondant à la formule générale **(I)** sont des guanidines 1,2,3-trisubstituées et 1,2,3,3-tétrasubstituées et présentent l'avantage d'être liquides, incolores, inodores et solubles dans les matrices silicones. Les guanidines non silylées selon l'invention sont mises en oeuvre dans les systèmes silicones à réticuler à des teneurs très faibles, et permettent suivant la teneur d'adapter les temps de travail à l'application tout en garantissant des excellentes duretés des élastomères obtenus.

Selon un mode de réalisation préféré le catalyseur de polycondensation **A** est un composé organique non silylé répondant à la formule générale **(I)** et dans laquelle:
- les radicaux R₁, identiques ou différents, et le radical R₃ sont choisis, indépendamment les uns des autres, dans le groupe constitué par: un radical isopropyle, un radical cyclohexyle et un radical alkyle monovalent linéaire ou ramifié en C₁ - C₁₂.
- le radical R₂ représente un atome d'hydrogène, un groupe alkyle monovalent linéaire ou ramifié, un groupe cycloalkyle, un groupe alkyle substitué par un cycle, substitué ou non et pouvant comprendre au moins un hétéroatome, un groupe arylalkyle, un groupe fluoroalkyle, un groupe alkylamine ou alkylguanidine, et
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants.

Des catalyseurs de polycondensation **A** particulièrement préférés sont des composés organiques non silylés choisis parmi le groupe constitué par les composés **(A1)** à **(A6)** suivants:

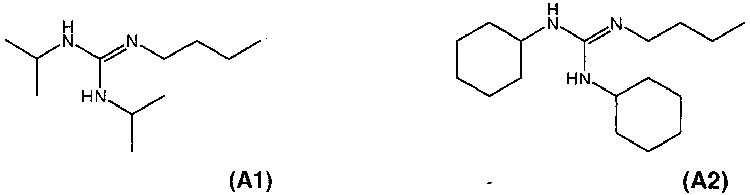

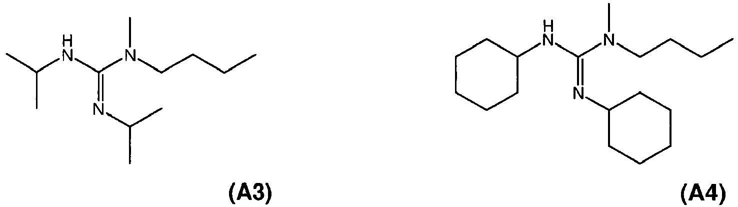

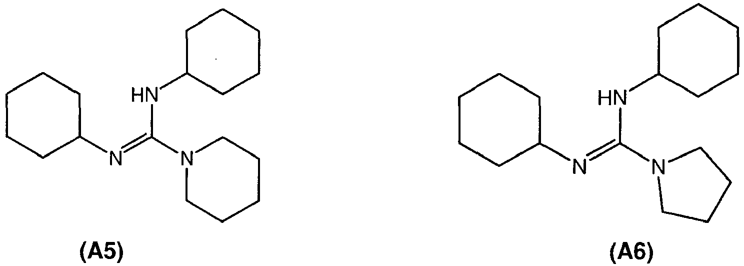

La quantité de catalyseurs de polycondensation **A** selon l'invention est comprise entre 0,01 et 10 % en poids de la masse totale, de préférence entre 0,1 et 5 %, que ce soit une préparation mono ou bicomposant.

Tout matériau qui est utilisé dans un environnement aquatique et qui est sujet aux souillures, peut être un support pour la présente invention. Des supports possibles sont les matériaux de construction des bateaux, tels que l'acier, l'aluminium, le bois, les fibres de verre imprégnées de résine et n'importe quel autre matériau composite. Les matériaux utilisés pour les canalisations, tels que le béton, les matières plastiques, l'acier, le fer et d'autres métaux, peuvent également être revêtus. Les bassins contenant de l'eau, y compris les piscines, sont sujets aux souillures. Les matériaux utilisés pour la fabrication des bassins sont identiques ou semblables à ceux utilisés pour la fabrication des canalisations.

Lorsqu'on utilise une couche antisalissure (ou "top coat") selon l'invention on peut lui associer une couche favorisant l'adhérence (ou "tie coat") de nature diverse et variée. Par exemple, elle peut être en polyuréthanne, en caoutchouc naturel ou synthétique éventuellement chloré, tels que le chloroprène et le néoprène, en caoutchouc butyral/silicone (KOKAI JP-A-78/137 231, JP-A-78/137 233 et JP-A-78/137 234). Suivant une autre approche, par exemple décrite dans le brevet US-5,449,553, un « tie coat » est décrit et est préparé à partir d'un composition durcissable à l'humidité de l'air comprenant un catalyseur de polycondensation à base d'étain, un réticulant tel que le silicate d'éthyle et un co-polymère issu du produit de réaction d'un organopolysiloxane à terminaison silylhydroxy avec un monomère polymérisable tels qu'un styrène ou une dioléfine conjuguée comme par exemple le 1,3-butadiène. Suivant un autre exemple décrit dans le brevet EP-1670866, un « tie coat » est formé à partir d'une composition comprenant
(i) de 0 à 60 % en poids humide de pigments et de charges ; et
(ii) le complément étant une phase à base de liant comprenant :
   - de 1 à 90 % en poids humide d'un ou de plusieurs polysiloxanes à fonction amine,
   - de 1 à 90 % en poids humide d'un ou de plusieurs de polysiloxanes à fonction époxy, et
   - de 0 à 20 % en poids humide d'un promoteur d'adhésion choisi dans le groupe constitué par les polysiloxanes à fonction hydroxyle, les polysiloxanes à fonction hydroxyalkyle et les polysiloxanes à fonction alcoxy en C₁-C₄.

Selon un mode de réalisation particulièrement préféré, la composition polyorganosiloxane durcissable pour former la couche antisalissure comprend outre une quantité catalytiquement efficace d'au moins un catalyseur de polycondensation **A** selon l'invention et tel que défini ci-dessus et une base silicone **B** comprenant:
- au moins une huile polyorganosiloxane **C** susceptible de réticuler par polycondensation en un élastomère,
- au moins un composé **L** qui exsude à la surface de la couche antisalissure lorsque le réseau élastomère est formé améliorant ainsi l'effet "antisalissure",
- au moins un agent de réticulation **D,**
- éventuellement au moins un promoteur d'adhérence **E,**
- éventuellement au moins une charge minérale siliceuse, organique et/ou non siliceuse **F,**
- éventuellement au moins un pigment, une base colorante ou un agent de coloration **H,** et
- éventuellement au moins un solvant **K.**

Des exemples de composés **L** qui exsudent à la surface de la couche antisalissure lorsque le réseau élastomère est formé améliorant ainsi l'effet "antisalissure" sont par exemple:
a) des huiles polyorganosiloxanes répondant à la formule générale **(II)** suivante: 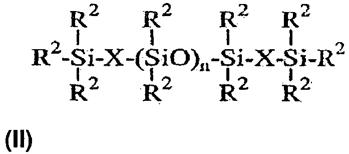 dans laquelle:
   - R² est un radical alkyle, aryle ou alkényle, les radicaux méthyle et phényle sont préférés (un exemple particulièrement préféré étant une huile méthylphénylpolysiloxane telle que décrite par exemple dans le brevet US-A-4 025 693),
   - X est un atome d'oxygène ou un groupe hydrocarboné divalent de 1 à 8 atome de carbone,
   - n est un nombre défini de manière à obtenir un diorganopolysiloxane ayant une viscosité comprise entre 10 et 1x10⁶ mm²/s à 25°C,

Ces huiles polyorganosiloxanes peuvent éventuellement être greffées et comprendre des groupements acrylique, amide, amine, carbonyle, carboxyliques, carboxylates, thiol, thioether, urée, ammonium quaternaire, fluoroalkyl ou perfluoroalkyl.

Des huiles polydiméthylsiloxane greffés ou séquencées comprenant au moins un bloc polyéther (avec par exemple des groupements polyéthylène glycol et/ou polypropylène glycol) peuvent également être employées,
b) un composé liquide hydrocarboné: par exemple une polyoléfine tel qu'un co-polymère ethylène\propylène et en particulier un polyisobutene de faible poids moléculaire (jusqu'à 5000 g/mol et de préférence entre 300 et 500 g/mol),
c) un composé liquide organique choisi parmi les polydiènes, les polyesters, les polyisocyanates, les polyuréthanes, les polyépoxides, les fluoroalkyles, les fluoroethers, les huiles lubrifiantes (voir par exemple le brevet (FR-A-2 375 305), des plastifiants (par exemple des esters d'acide gras qui peuvent éventuellement être substitués par des hétéroatomes ou des des esters d'acide phosphorique ou des composés halohydrocarbonés). Les polyéthylènes glycols, les polypropylènes glycol ou l'huile de castor peuvent également être utilisés et ils amènent également des propriétés anti-coulures lors de l'application de la composition,
d) des paraffines liquides et des masses cireuses du type pétrolatum (JP-A-83/013 673),
e) un polymère thermoplastique tel que du PVC,
f) un copolymère chlorure de vinyle/acétate de vinyle (KOKAI JP-A-79/026 826), ou
g) des tensio-actifs cationiques, anioniques, non-ioniques, amphotères (JP-A-85/258 271).

Des exemples de solvants **K** sont par exemple : des dérivés hydrocarbonés aliphatique cycloaliphatique ou aromatiques tels que le white spirit, le cyclohexane, le toluene, l'octaméthyltrisiloxane, le xylène et les solvants ester tels que le méthoxypropylacétate, le n-butyl acétate et le 2-éthoxyéthylacetate ainsi que leurs mélanges. La quantité de solvant est déterminée suivant l'application ou le support à traiter de manière à obtenir une peinture de viscosité acceptable.

### Description de la base silicone B :

Les bases silicone utilisées dans la présente invention réticulant et durcissant par des réactions de polycondensation sont bien connues. Ces bases sont décrites en détail en particulier dans de nombreux brevets et elles sont disponibles dans le commerce.

Ces bases silicones peuvent être mono-composantes, c'est-à-dire conditionnées en un seul emballage, et stables au stockage en l'absence d'humidité, durcissables en présence d'humidité, en particulier d'humidité apportée par l'air ambiant ou par de l'eau générée au sein de la base lors de son emploi.

En dehors des bases mono-composantes peuvent être utilisées des bases bi-composantes, c'est-à-dire conditionnées en deux emballages, qui durcissent dès l'incorporation du catalyseur de polycondensation selon l'invention. Elles sont conditionnées après incorporation du catalyseur en deux fractions séparées, l'une des fractions pouvant ne renfermer par exemple que le catalyseur selon l'invention ou un mélange avec l'agent réticulant.

L'huile polyorganosiloxane **C** est de préférence un polymère α,ω-dihydroxypolydiorganosiloxane, de viscosité comprise entre 50 et 5 000 000 mPa.s à 25 °C et l'agent de réticulation **D** est de préférence un composé organosilicié portant plus de deux groupes hydrolysables liés aux atomes de silicium par molécule. L'huile polyorganosiloxane **C** peut également être fonctionnalisée au niveau de ses extrémités par des radicaux hydrolysables obtenu par condensation d'un précurseur porteur de fonctions hydroxyles avec un silane réticulant porteur de radicaux hydrolysables. Cette huile polyorganosiloxane **C** susceptible de réticuler par polycondensation en un élastomère peut éventuellement être greffée avec au moins un bloc polyéther (avec par exemple des groupements polyéthylène glycol et/ou polypropylène glycol), polyacrylate ou polyméthacrylate.

Comme agent de réticulation **D** on peut citer :
- les silanes de formule générale suivante (et les produits d'hydrolyse partielle de ce silane):

   R¹ₖSi(OR²)₍₄₋ₖ₎

   dans laquelle:
   - les symboles R¹, identiques ou différents, représentent des radicaux hydrocarbonés en C₁-C₁₀ englobant:
      - les radicaux alkyles en C₁-C₁₀ tels que les radicaux méthyle, éthyle, propyle, butyle, pentyle, éthyl-2 hexyle, octyle, décyle,
         - les radicaux vinyle, allyle, hexenyle et
         - les radicaux cycloalkyles en C₅-C₈ tels que les radicaux phényle, tolyle et xylyle,
   - les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆ et k est égal à 0, 1 ou 2.

Comme exemple de radicaux alcoxyalkylène en C₃-C₆ on peut citer les radicaux suivants :

CH₃OCH₂CH₂-

CH₃OCH₂CH(CH₃)-

CH₃OCH(CH₃)CH₂-

C₂H₅OCH₂CH₂CH₂-

Les agents de réticulation **D** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **D,** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **D** qui peuvent être utilisés, on cite plus particulièrement les silanes suivants :
- le propyltriméthoxysilane,
- le méthyltriméthoxysilane,
- l'éthyltriméthoxysilane,
- le vinyltriéthoxysilane,
- le méthyltriéthoxysilane,
- le propyltriéthoxysilane,
- le tétraéthoxysilane,
- le tétrapropoxysilane,
- les silanes de type 1,2-bis(trialcoxysilyl)éthane tels que le :
   1,2-bis(triméthoxysilyl)éthane ou le 1,2-bis(triéthoxysilyl)éthane,
- le tétraisopropoxysilane,
- ou encore: CH₃Si(OCH₃)₃; C₂H₅Si(OC₂H₅)₃; C₂H₅Si(OCH₃)₃CH₂=CHSi(OCH₃)₃; CH₂=CHSi(OCH₂CH₂OCH₃)₃, C₆H₅Si(OCH₃)₃ ; [CH₃][OCH(CH₃)CH₂OCH₃]Si[OCH₃]₂,Si(OCH₃)₄ ; Si(OC₂H₅)₄; Si(OCH₂CH₂CH₃)₄; Si(OCH₂CH₂CH₂CH₃)₄ ,Si(OC₂H₄OCH₃)₄ ; CH₃Si(OC₂H₄OCH₃)₃ ; ClCH₂Si(OC₂H₅)₃.

Comme autres exemples d'agent de réticulation D, on peut citer le polysilicate d'éthyle, ou le polysilicate de n-propyle.

D'autres agents de réticulation **D** qui peuvent également être employés sont les silanes de formule générale suivante (et les produits d'hydrolyse partielle de ce silane):

R¹ₖSi(Y)₍₄₋ₖ₎

dans laquelle:
- les symboles R¹, identiques ou différents, sont tels que définis ci-dessus.
- les symboles Y, identiques ou différents, représentent des groupements hydrolysables tels que par exemple les groupements amino, amido, aminoxy, oxime, acyloxy et alkényloxy.

On utilise généralement de 0,1 à 60 parties en poids d'agent de réticulation **D** pour 100 parties en poids de polyorganosiloxane **C** susceptible de réticuler par polycondensation en un élastomère.

Ainsi la composition selon l'invention peut comprendre au moins un promoteur d'adhérence **E** tel que par exemple les composés organosiliciques portant à la fois :
(1) un ou des groupes hydrolysables liés à l'atome de silicium, et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seuls ou en mélange:
   vinyltriméthoxysilane (VTMO),
   3-glycidoxypropyl-triméthoxysilane (GLYMO),
   méthacryloxypropyltriméthoxysilane (MEMO),
   [H₂N(CH₂)₃]Si(OCH₂CH₂CH₃)₃,
   [H₂N(CH₂)₃]Si(OCH₃)₃
   [H₂N(CH₂)₃]Si(OC₂H₅)₃
   [H₂N(CH₂)₄]Si(OCH₃)₃
   [H₂NCH₂CH(CH₃)CH₂CH₂]SiCH₃(OCH₃)₂
   [H₂NCH₂]Si(OCH₃)₃
   [n-C₄H₉-HN-CH₂]Si(OCH₃)₃
   [H₂N(CH₂)₂NH(CH₂)₃]Si(OCH₃)₃
   [H₂N(CH₂)₂NH(CH₂)₃]Si(OCH₂CH₂OCH₃)₃
   [CH₃NH(CH₂)₂NH(CH₂)₃]Si(OCH₃)₃
   [H(NHCH₂CH₂)₂NH(CH₂)₃]Si(OCH₃)₃ 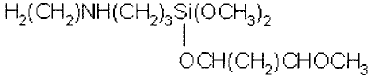 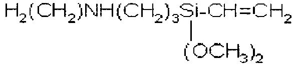
   les silanes de type 3-uréidopropyltrialcoxysilane tels que : le 3-uréidopropyltriéthoxysilane ou le 3-uréidopropyltriméthoxysilane,
   ou des oligomères polyorganosiloxaniques contenant de tels groupes organiques à une teneur supérieure à 20%.

Pour les bases mono- et bi-composantes, on utilise comme charges minérales **F** des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m²/g et de 70 à 30 % de silices plus grossièrement divisées de surface spécifique inférieure à 30 m²/g.

L'introduction des charges a pour but de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques. Des exemples de pigments **H** sont à titre indicatif: l'oxyde de fer rouge, l'oxyde de zinc, le noir de carbone, le graphite, l'oxyde de fer jaune, le blanc d'oxyde de titane, l'oxyde de chrome, l'oxyde de cobalt, , la litharge, l'outremer et le rouge et le jaune de molybdène, ou des pigments organiques connus et largement utilisés dans le domaine des peintures aquatiques.

D'autres agents auxiliaires et additifs usuels (thixotropants, anti-coulures,...) peuvent être incorporés à la composition selon l'invention.

Outre les constituants principaux, des polymères polyorganosiloxanes linéaires non réactif **G** peuvent être introduits, de préférence dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **G** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties de d'huile polyorganosiloxane **C** susceptible de réticuler par polycondensation.

Les compositions selon l'invention peuvent en outre comprendre au moins une résine silicone **H.** Ces résines silicones sont des polymères organopolysiloxanes ramifiés bien connus et disponibles dans le commerce. Elles présentent, par molécule, au moins deux motifs différents choisis parmi ceux de formule R'"₃SiO_{1/2} (motif M), R"'₂SiO_{1/2} (motif D), R"'SiO_{3/2} (motif T) et SiO_{4/2} (motif Q). Les radicaux R'" sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux **R** alkyle, les radicaux méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines DT et les résines MDT.

Comme exemple de résines, on peut citer les résines MQ, les résines MDQ, les résines DT et les résines MDT.

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Tous ces ingrédients peuvent être chargés dans l'appareillage selon un ordre quelconque d'introduction.

L'invention concerne aussi un procédé d'application d'un revêtement antisalissure sur un support destiné à être utilisé dans des applications aquatiques, caractérisé en ce qu'il comprend les étapes suivantes:
a) éventuellement l'application d'au moins une couche primaire sur ledit support comprenant au moins un produit anticorrosif,
b) l'application d'une couche favorisant l'adhérence ou "tie coat" sur ladite couche primaire ou sur ledit support lorsque la couche primaire est absente,
c) le durcissement de ladite couche favorisant l'adhérence,
d) l'application d'une couche antisalissure ou "top coat" sur la couche favorisant l'adhérence, et
e) le durcissement de ladite couche antisalissure,
ledit procédé étant caractérisé en ce que la couche antisalissure et/ou la couche favorisant l'adhérence est/sont préparée(s) à partir d'une composition polyorganosiloxane durcissable selon l'invention et telle que décrite ci-dessus.

L'épaisseur des couches appliquées peut varier et des pellicules de 12 à 1000 microns d'épaisseur (sous condition d'un dépôt homogène) ont donné de bons résultats. L'épaisseur type des différentes couches est d'environ 50 µm pour le primaire, 150 µm pour le «tie coat » et 150 µm pour le « top coat ». Bien entendu, l'Homme de l'Art saura adapter l'épaisseur des différentes couches en fonction du résultat désiré.

Le dernier objet de l'invention concerne l'utilisation d'une composition polyorganosiloxane durcissable selon l'invention et telle que décrite ci-dessus pour former un revêtement favorisant l'adhérence "tie coat" ou un revêtement antisalissure "top coat" d'une peinture destinée à protéger un article contre l'adhésion d'organismes aquatiques.

Des bases mono-composantes sont décrites en détail par exemple dans les brevets EP 141 685, EP 147 323, EP 102 268, EP 21 859, FR 2 121 289 et FR 2 121 631, cités en référence.

Des bases bi-composantes sont décrites en détail par exemple dans les brevets EP 118 325, EP 117 772, EP 10 478, EP 50 358, EP 184 966, US 3 801 572 et US 3 888 815, cités comme référence.

D'autres avantages et caractéristiques de la présente invention apparaîtront à la lecture des exemples suivants donnés à titre illustratif nullement limitatif.

### EXEMPLES:

### I) Préparation des catalyseurs selon l'invention

### a) 1-butyl-2,3-diisopropylguanidine (A1) :

Un mélange de 33 g de N-butylamine (0,45 mol) et de 19 g de diisopropylcarbodiimide (0,15 mol) est chauffé à reflux 3h30. L'analyse par CPG montre alors une conversion supérieure à 99.5 % de la diisopropylcarbodiimide. Le mélange final incolore est concentré à 60°C sous 20 mbar pendant 2 h pour donner 29 g d'un liquide incolore et pratiquement inodore de faible viscosité, correspondant à la guanidine attendue (rendement 96.7 %).
RMN ¹H/CDCl₃ (ppm) : 0.93 (3 H, t), 1.14 (12 H, d), 1.37 (2 H, sex), 1.52 (2 H, quint), 3.01 (2 H, t), 3.57 (2 H, m).

### b) 1-butyl-2,3-diisopropyl-1-méthylguanidine (A3) :

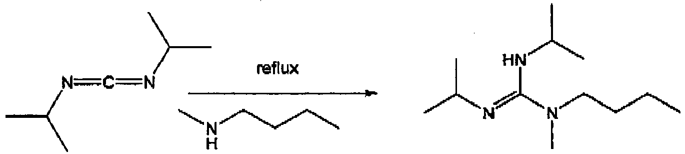

Un mélange de 32.68 g de N-butyl-N-méthylamine (0,375 mol) et de 23.66 g de diisopropylcarbodiimide (0,1875 mol) est chauffé à reflux 3h. L'analyse par CPG montre alors une conversion supérieure à 99.5 % de la diisopropylcarbodiimide. Le mélange final incolore est concentré à 60°C sous 5 mbar pendant 2 h pour donner 40 g d'un liquide incolore et pratiquement inodore de faible viscosité, correspondant à la guanidine attendue (rendement 100 %).
RMN ¹H/CDCl₃ (ppm) : 0.88 (3 H, t), 1.06 (12 H, d), 1.26 (2 H, sex), 1.46 (2 H, quint), 2.67 (3 H, s), 3.05 (2 H, t), 3.35 (2 H, m).

### c) 1-butyl-2,3-dicyclohexylguanidine (A2) RN-CAS = 60006-40-8

Un mélange de 15.69 g de N-butylamine (0,214 mol) et de 22.13 g de dicyclohexylcarbodiimide (0,107 mol) est chauffé à reflux 2h. L'analyse par CPG montre alors une conversion supérieure à 99.6 % de la dicyclohexylcarbodiimide. Le mélange final incolore est concentré à 60°C sous 1 mbar pendant 2 h pour donner 29.7 g d'un liquide incolore et pratiquement inodore moyennement visqueux, correspondant à la guanidine attendue (rendement 99 %).

### d) 1-butyl-2,3-dicyclohexyl-1-méthylguanidine (A4):

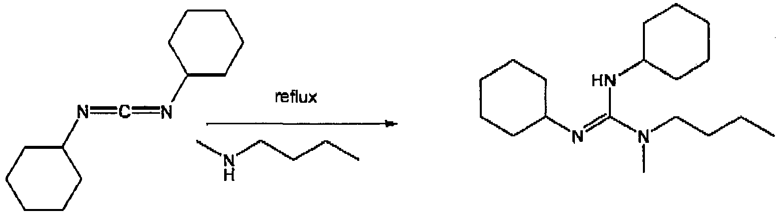

Un mélange de 17.78 g de N-butyl-N-méthylamine (0,204 mol) et de 21.05 g de dicyclohexylcarbodiimide (0,102 mol) est chauffé à reflux 3h. L'analyse par CPG montre alors une conversion supérieure à 99.5 % de la dicyclohexylcarbodiimide. Le mélange final incolore est concentré à 60°C sous 1 mbar pendant 2 h pour donner 29.9 g d'un liquide incolore et pratiquement inodore moyennement visqueux, correspondant à la guanidine attendue (rendement 99.7 %).
RMN ¹H/CDCl₃ (ppm) : 0.89 (3 H, t), 1-1.4 (10 H, m), 1.47 (2 H, quint), 1.5-2 (12 H, plusieurs m), 2.67 (3 H, s), 2.90 (1 H, m), 2.97 (1 H, m), 3.06 (2 H, t)

### e) 1,2-Dicyclohexyl-3-pipéridylguanidine (A5) RN-CAS 60006-25-9 :

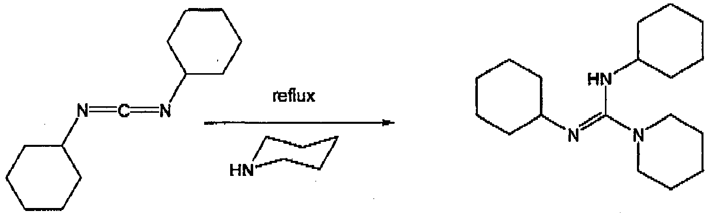

Un mélange de 11.69 g de pipéridine (0,137 mol) et de 14.16 g de dicyclohexylcarbodiimide (0,0686 mol) est chauffé à reflux 3h30. L'analyse par CPG montre alors une conversion supérieure à 99.7 % de la dicyclohexylcarbodiimide. Le mélange final incolore est concentré à 60°C sous 1 mbar pendant 2 h pour donner 19.9 g d'un liquide incolore et pratiquement inodore très visqueux, correspondant à la guanidine attendue (rendement 99.5 %).

### f) 1,2-Dicyclohexyl-3-pyrrolidylguanidine (A6) RN-CAS 60006-28-2 :

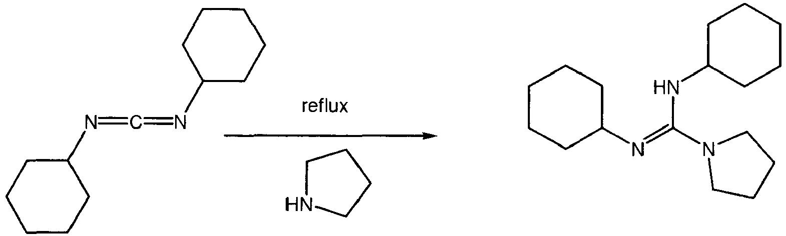

Un mélange de 19.2 g de pyrrolidine (0,27 mol) et de 18.6 g de dicyclohexylcarbodiimide (0,09 mol) est chauffé à reflux 4h. L'analyse par CPG montre alors une conversion supérieure à 99.8 % de la dicyclohexylcarbodiimide. Le mélange final incolore est concentré à 60°C sous 1 mbar pendant 1 h pour donner 24.9 g d'un liquide incolore et pratiquement inodore moyennement visqueux, correspondant à la guanidine attendue (rendement 99.6 %).

### II) Activité des catalyseurs

La comparaison de l'activité des catalyseurs selon l'invention par rapport à un catalyseur standard (bis-néodécanoate de diméthylétain - UL28, comparatif 1) et à la 1,1,3,3-tétraméthylguanidine (comparatif 2),est réalisée sur un système simplifié.

A 25 g d'une huile α,ω-dihydroxylée de viscosité de 14000 centipoises contenant 0.065% d'OH est mélangé 1.06 g de silicate d'éthyle "avancé" (= partiellement hydrolysé), puis la même quantité molaire (0.7 mmol) de catalyseur. On mesure le temps de travail ou temps de gel, puis les duretés (en Shore A noté DSA dans le tableau de résultats) d'un pion de 6 mm d'épaisseur dans des conditions régulées (23 °C et 50% d'humidité relative) et sur des temps croissants. Dans le tableau suivant le symbole « > » correspond aux valeurs de dureté mesurées sur la partie supérieure du pion et le symbole « < » correspond aux valeurs de dureté mesurées sur la partie inférieure du pion moins exposée à l'air ambiant que la partie supérieure.
Les résultats sont indiqués dans le tableau I ci-dessous:

**Tableau I**

| Catalyseur | Temps de travail | DSA 24h | | DSA 48h | | DSA 6 jours | | DSA (n jours) | | |
|---|---|---|---|---|---|---|---|---|---|---|
| | | > | < | > | > | > | < | > | < | (n j) |
| **Comparatif 1 (Sn)** | 6 min | 22.5 | 22.5 | Non mesurée | | Non mesurée | | 23 | 23 | (20 j) |
| **Comparatif 2 (TMG)** | 7 min | Pas de réticulation | | Pas de réticulation | | Pas de réticulation | | Pas de réticulation | | |
| **Invention (A1)** | 30 s | 23 | 9 | Non mesurée | | 24 | 25 | 22 | 18 | (28 j) |
| **Invention (A3)** | 2min 30 s | 23 | 9 | 24 | 22 | Non mesurée | | 22 | 21 | (13 j) |
| **Invention (A4)** | 8-9 min | 21 | 19 | 21 | 21 | 24 | 24 | 23 | 23 | (13 j) |

La guanidine 1,2,3,3-tétrasubstituée (A4) est particulièrement efficace avec un temps de travail et une cinétique de dureté tout à fait comparable avec la référence catalyseur étain.

### III) Préparation d'un « Top Coat » selon l'invention

Formulation 1: toutes les quantités sont exprimées en parties en poids.
- 80 parties Huile polydiméthylsiloxane α,ω-dihydroxylée de viscosité 3500 centipoises
- 10 parties Silicate d'éthyle
- 5 parties Huile méthylphénylpolysiloxane commercialisée par la société Bluestar Silicones sous le nom Rhodorsil Huile 510V100^{®}.
- 2 parties Huile méthylphénylpolysiloxane commercialisée par la société Bluestar Silicones sous le nom Rhodorsil Huile 550^{®}
- 3 parties Silice Aerosil 55^{®} commercialisée par la société Degussa
- 1 partie Huile de castor
- 0,8 parties 1-butyl-2,3-dicyclohexyl-1-méthylguanidine **(A4)**
- 0,7 parties Pigment Bayferrox 130F^{®} commercialisé par la société Bayer
- 0,1 parties Dispersant Disperbyk 140^{®} commercialisé par la société Byk
- 20 parties Xylène

Avec cette formulation, le temps de travail obtenu est de 45 minutes.

### IV) Evaluation Antifouling

On revêt une plaque de métal en acier sablé et dégraissé avec une couche primaire époxy (préparée à partir du SigmaShield 610^{®} commercialisé par la société Sigmakalon) d'une épaisseur de 50 µm environ. Après 72 heures de séchage à température ambiante on applique une couche favorisant l'adhérence "tie coat" (préparée à partir du SigmaGlide 790^{®} commercialisé par la société Sigmakalon) d'une épaisseur de 150 microns environ. Après 48 heures de séchage à température ambiante, on applique une couche de 150 µm environ du « top coat » préparé selon la formulation 1 décrite ci-dessus au § III).

Après un séchage de 48 heures à température ambiante, on plonge la plaque en milieu marin (dans de l'eau de mer) et on l'examine au bout de 12 et 23 semaines d'immersion.

Après lavage à grande eau, l'évaluation antifouling est de 100, ce qui indique l'absence complète d'organismes sur la plaque revêtue.

## Revendications

1. Article présentant des propriétés antisalissures et destiné à être utilisé dans des applications aquatiques en particulier marines, qui comprend:
a) un support,
b) éventuellement au moins une couche primaire sur ledit support comprenant au moins un produit anticorrosif,
c) au moins une couche favorisant l'adhérence ou "tie coat", déposée sur ladite couche primaire ou sur ledit support lorsque la couche primaire est absente, et
d) au moins une couche antisalissure ou "top coat", déposée sur ladite couche favorisant l'adhérence ou "tie coat",
**caractérisé en ce que** la couche antisalissure et/ou la couche favorisant l'adhérence est/sont préparée(s) à partir d'une composition polyorganosiloxane durcissable ne contenant pas de catalyseur métallique et **caractérisée en ce qu'**elle comprend d'une part une base silicone B apte à durcir par une réaction de polycondensation en un élastomère silicone et d'autre part une quantité comprise entre 0,01 et 10% en poids de la masse totale, d'au moins un catalyseur de polycondensation A qui est un composé organique non silylé et répondant à la formule générale **(I):** 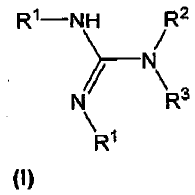 dans laquelle,
- les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
- le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
- le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants, et
- avec la condition supplémentaire que les radicaux R¹, R² et R³ ne comprennent pas d'atome de silicium.

2. Article selon la revendication 1 dans lequel le catalyseur de polycondensation A est un composé organique non silylé choisi parmi le groupe constitué par les composés **(A1)** à **(A6)** suivants:

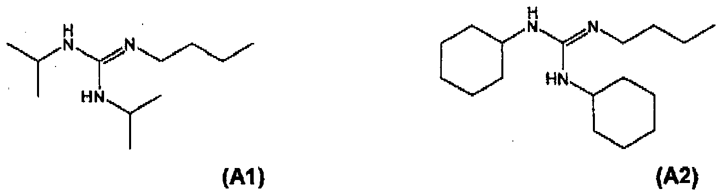

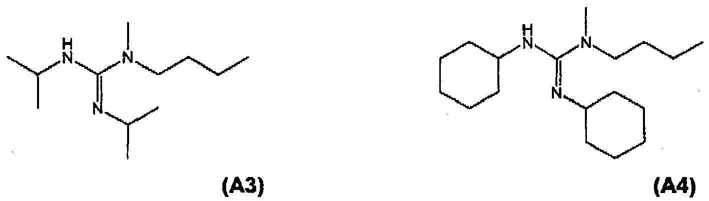

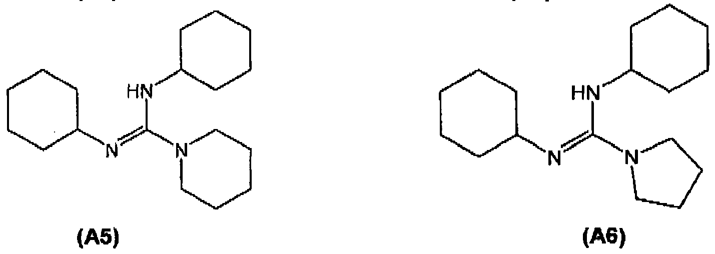

3. Article selon la revendication 1 **caractérisé en ce que** la base silicone **B** comprend:
- au moins une huile polyorganosiloxane **C** susceptible de réticuler par polycondensation en un élastomère,
- au moins un composé **L** qui exsude à la surface de la couche antisalissure lorsque le réseau élastomère est formé améliorant ainsi l'effet "antisalissure",
- au moins un agent de réticulation **D,**
- éventuellement au moins un promoteur d'adhérence **E,**
- éventuellement au moins une charge minérale siliceuse, organique et/ou non siliceuse **F,**
- éventuellement au moins une base colorante ou un agent de coloration **H,** et
- éventuellement au moins un solvant **K.**

4. Procédé d'application d'un revêtement antisalissure sur un support destiné à être utilisé dans des applications aquatiques, **caractérisé en ce qu'**il comprend les étapes suivantes:
a) éventuellement l'application d'au moins une couche primaire sur ledit support comprenant au moins un produit anticorrosif,
b) l'application d'une couche favorisant l'adhérence ou "tie coat" sur ladite couche primaire ou sur ledit support lorsque la couche primaire est absente,
c) le durcissement de ladite couche favorisant l'adhérence,
d) l'application d'une couche antisalissure ou "top coat" sur la couche favorisant l'adhérence, et
e) le durcissement de ladite couche antisalissure,
ledit procédé étant **caractérisé en ce que** la couche antisalissure et/ou la couche favorisant l'adhérence est/sont préparée(s) à partir d'une composition polyorganosiloxane durcissable selon l'une quelconque des revendications précédentes.

5. Utilisation d'une composition polyorganosiloxane durcissable selon l'une quelconque des revendications 1 à 3 pour former un revêtement favorisant l'adhérence "tie coat" ou un revêtement antisalissure "top coat" d'une peinture destinée à protéger un article contre l'adhésion d'organismes aquatiques.

## Patentansprüche

1. Gegenstand mit Antifouling-Eigenschaften zur Verwendung bei aquatischen und insbesondere marinen Anwendungen, der Folgendes umfasst:
a) einen Träger,
b) gegebenenfalls mindestens eine Grundierungsschicht auf dem Träger, die mindestens ein Korrosionsschutzprodukt umfasst,
c) mindestens eine haftungsfördernde Schicht ("tie coat"), die auf der Grundierungsschicht bzw. bei Abwesenheit der Grundierungsschicht auf dem Substrat abgeschieden ist, und
d) mindestens eine Antifouling-Schicht ("top coat"), die auf der haftungsfördernden Schicht ("tie coat") abgeschieden ist,
**dadurch gekennzeichnet, dass** die Antifouling-Schicht und/oder die haftungsfördernde Schicht aus einer härtbaren Polyorganosiloxanzusammensetzung, die keinen Metallkatalysator enthält, hergestellt wird bzw. werden, und **dadurch gekennzeichnet, dass** sie einerseits eine Silikonbasis **B,** die durch eine Polykondensationsreaktion zu einem Silikonelastomer gehärtet werden kann, und andererseits eine Menge zwischen 0,01 und 10 Gew.-%, bezogen auf die Gesamtmasse, mindestens eines Polykondensationskatalysators **A,** bei dem es sich um eine nichtsilylierte organische Verbindung der allgemeinen Formel **(I)** handelt: 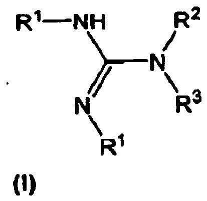 worin
- die Reste R¹ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, stehen,
- der Rest R² für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine aromatische Gruppe, eine Arylalkyl-gruppe, eine Fluoralkylgruppe, eine Alkylamingruppe oder eine Alkylguanidingruppe steht und
- der Rest R³ für eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe oder eine Alkylguanidingruppe steht;
- dann, wenn der Rest R² nicht für ein Wasserstoffatom steht, die Reste R² und R³ zu einem 3-, 4-, 5-, 6- oder 7-gliedrigen aliphatischen Ring, der gegebenenfalls durch einen oder mehrere Substituenten substituiert ist, verbunden sein können, und
- mit der zusätzlichen Maßgabe, dass die Reste R¹, R² und R³ kein Siliciumatom enthalten,
umfasst.

2. Gegenstand nach Anspruch 1, wobei es sich bei dem Polykondensationskatalysator A um eine nichtsilylierte organische Verbindung aus der Gruppe bestehend aus den folgenden Verbindungen **(A1)** bis (A6) handelt:

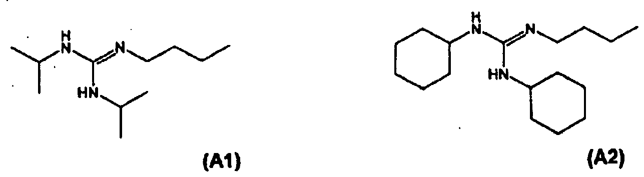

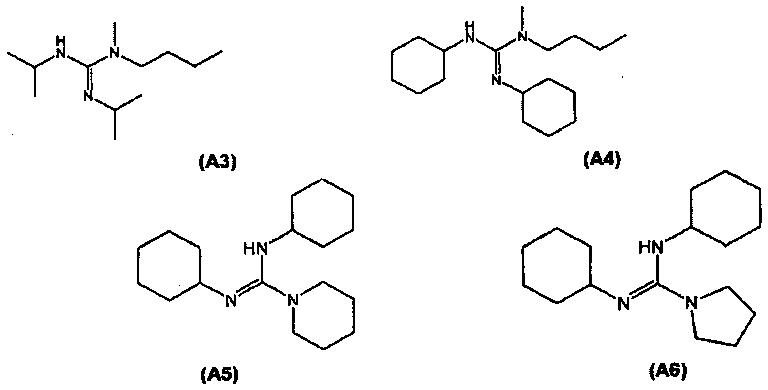

3. Gegenstand nach Anspruch 1, **dadurch gekennzeichnet, dass** die Silikonbasis **B**
- mindestens ein Polyorganosiloxanöl **C**, das durch Polykondensation zu einem Elastomer vernetzt werden kann,
- mindestens eine Verbindung **L,** die bei der Bildung des Elastomernetzwerks an der Oberfläche der Antifouling-Schicht ausblutet, wodurch die "Antifouling"-Wirkung verbessert wird,
- gegebenenfalls mindestens ein Vernetzungsmittel **D,**
- gegebenenfalls mindestens einen Haftvermittler **E,**
- gegebenenfalls mindestens einen siliciumhaltigen, organischen und/oder nicht siliciumhaltigen mineralischen Füllstoff **F,**
- gegebenenfalls mindestens eine Farbbasis oder ein Farbmittel **H** und
- gegebenenfalls mindestens ein Lösungsmittel **K** umfasst.

4. Verfahren zum Aufbringen einer Antifouling-Beschichtung auf einen Träger zur Verwendung bei aquatischen Anwendungen, **dadurch gekennzeichnet, dass** es die folgenden Schritte umfasst:
a) gegebenenfalls das Aufbringen mindestens einer Grundierungsschicht auf den Träger, die mindestens ein Korrosionsschutzprodukt umfasst,
b) das Aufbringen einer haftungsfördernden Schicht ("tie coat"), auf die Grundierungsschicht bzw. bei Abwesenheit der Grundierungsschicht auf das Substrat,
c) das Härten der haftungsfördernden Schicht,
d) das Aufbringen einer Antifouling-Schicht ("top coat"), die auf die haftungsfördernde Schicht und
e) das Härten der Antifouling-Schicht,
wobei das Verfahren **dadurch gekennzeichnet ist, dass** die Antifouling-Schicht und/oder die haftungsfördernde Schicht aus einer härtbaren Polyorganosiloxanzusammensetzung nach einem der vorhergehenden Ansprüche hergestellt wird bzw. werden.

5. Verwendung einer härtbaren Polyorganosiloxan-zusammensetzung nach einem der Ansprüche 1 bis 3 zur Bildung einer haftungsfördernden Beschichtung ("tie coat") oder einer Antifouling-Beschichtung ("top coat") eines Anstrichmittels zum Schützen eines Gegenstands vor dem Anhaften aquatischer Organismen.

## Claims

1. Article having antifouling properties and intended to be employed in aquatic uses, in particular marine uses, which comprises:
a) a support,
b) optionally, at least one primer coat on said support comprising at least one anticorrosive product,
c) at least one adhesion-promoting coat or tie coat, deposited on said primer coat or on said support when the primer coat is absent, and
d) at least one antifouling coat or topcoat, deposited on said adhesion-promoting coat or tie coat,
**characterized in that** the antifouling coat and/or the tie coat is/are prepared from a curable polyorganosiloxane composition containing no metal catalyst, and **characterized in that** it comprises, firstly, a silicone base **B** capable of curing by means of a polycondensation reaction so as to give a silicone elastomer and, secondly, a catalytically effective amount of between 0.01% and 10% by weight of the total weight, of at least one polycondensation catalyst **A** which is a nonsilylated organic compound corresponding to general formula **(I):** 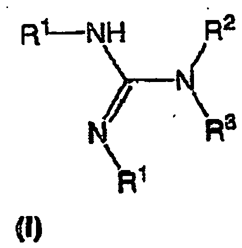 in which:
- the R¹ radicals, which may be identical or different, represent, independently of one another, a linear or branched, monovalent alkyl group, a cycloalkyl group, or a (cycloalkyl)alkyl group, the ring being substituted or unsubstituted and possibly comprising at least one heteroatom or one fluoroalkyl group,
- the R² radical represents a hydrogen atom, a linear or branched, monovalent alkyl group, a cycloalkyl group, an alkyl group substituted with a ring, which is substituted or unsubstituted and which may comprise at least one heteroatom, an aromatic group, an arylalkyl group, a fluoroalkyl group, an alkylamine group or an alkylguanidine group, and
- the R³ radical represents a linear or branched, monovalent alkyl group, a cycloalkyl group, an alkyl group substituted with a ring, which is substituted or unsubstituted and which may comprise at least one heteroatom, or arylalkyl, fluoroalkyl, alkylamine or alkylguanidine group,
- when the R² radical is not a hydrogen atom, the R² and R³ radicals may be linked so as to form a 3-, 4-, 5-, 6- or 7-membered aliphatic ring optionally substituted with one or more substituents, and
- with the additional condition that the R¹, R² and R³ radicals do not comprise a silicon atom.

2. Article according to Claim 1, in which the polycondensation catalyst **A** is a nonsilylated organic compound chosen from the group consisting of the following compounds **(A1)** to (**A6**):

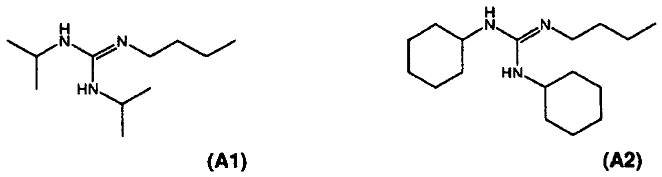

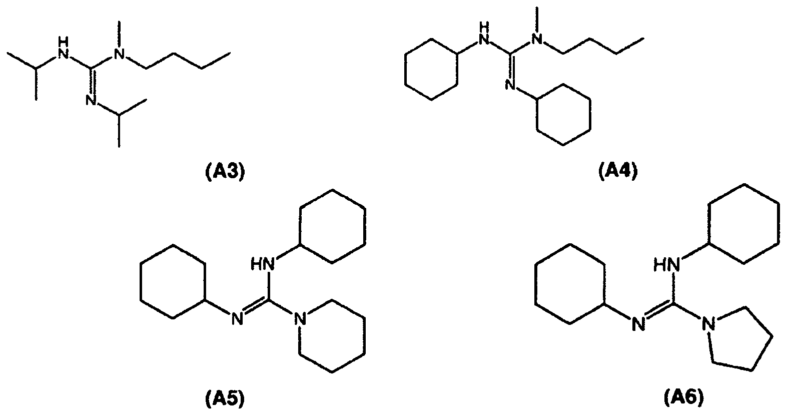

3. Article according to Claim 1, **characterized in that** the silicone base **B** comprises:
- at least one polyorganosiloxane oil C capable of crosslinking by polycondensation so as to give an elastomer,
- at least one compound **L** which exudes at the surface of the antifouling coat when the elastomer network is formed, thus improving the "antifouling" effect,
- at least one crosslinking agent **D,**
- optionally, at least one adhesion promoter **E,**
- optionally, at least one siliceous, organic and/or nonsiliceous mineral filler **F,**
- optionally, at least one coloring base and/or coloring agent **H,** and
- optionally, at least one solvent **K.**

4. Method for applying an antifouling coating to a support intended to be employed in aquatic uses, **characterized in that** it comprises the following steps:
a) optionally, the application of at least one primer coat to said support comprising at least one anticorrosive product,
b) the application of an adhesion-promoting coat or tie coat to said primer coat or to said support when the primer coat is absent,
c) the curing of said tie coat,
d) the application of an antifouling coat or topcoat to the tie coat, and
e) the curing of said antifouling coat,
said method being **characterized in that** the antifouling coat and the tie coat is/are prepared from a curable polyorganosiloxane composition according to any one of the preceding claims.

5. Use of a curable polyorganosiloxane composition according to any one of Claims 1 to 3, for forming a tie coat adhesion-promoting coating or a topcoat antifouling coating of a paint intended for protecting an article against the adhesion of aquatic organisms.
